# EUROPÄISCHE PATENTSCHRIFT

(11) **EP 4 151 694 B1**
(45) Veröffentlichungstag und Bekanntmachung des Hinweises auf die Patenterteilung: **12.06.2024**
(21) Anmeldenummer: 22191908.7
(22) Anmeldetag: 24.08.2022
(51) Int. Cl.: C09J 107/00, B60C 19/00, C09J 109/00

(54) **KLEBSTOFFZUSAMMENSETZUNG, VERFAHREN ZUM DAUERHAFTEN VERBINDEN EINER ERSTEN VULKANISIERTEN KAUTSCHUKKOMPONENTE MIT EINER ZWEITEN VULKANISIERTEN KAUTSCHUKKOMPONENTE UND VERBUND UMFASSEND EINE ERSTE VULKANISIERTE KAUTSCHUKKOMPONENTE UND EINE ZWEITE VULKANISIERTE KAUTSCHUKKOMPONENTE**
ADHESIVE COMPOSITION, METHOD FOR PERMANENTLY BONDING A FIRST VULCANIZED RUBBER COMPONENT TO A SECOND VULCANIZED RUBBER COMPONENT AND COMPOSITE COMPRISING A FIRST VULCANIZED RUBBER COMPONENT AND A SECOND VULCANIZED RUBBER COMPONENT
COMPOSITION ADHÉSIVE, PROCÉDÉ DE LIAISON PERMANENTE D'UN PREMIER COMPOSANT DE CAOUTCHOUC VULCANISÉ À UN SECOND COMPOSANT DE CAOUTCHOUC VULCANISÉ ET COMPOSITE COMPRENANT UN PREMIER COMPOSANT DE CAOUTCHOUC VULCANISÉ ET UN SECOND COMPOSANT DE CAOUTCHOUC VULCANISÉ

(30) Priorität: 16.09.2021 DE 102021210272
(43) Veröffentlichungstag der Anmeldung: 22.03.2023
(73) Patentinhaber: Continental Reifen Deutschland GmbH, 30175 Hannover (DE)
(72) Erfinder: Tim Kee, Sherry-Ann, 30165 Hannover (DE); Bottero, Ilaria, 30165 Hannover (DE)
(74) Vertreter: Continental Corporation

(56) Entgegenhaltungen:
- EP-A1- 2 236 316
- EP-A1- 2 957 424
- EP-A1- 3 552 849
- EP-A1- 3 564 332
- EP-A2- 2 336 315
- WO-A1-2015/140003
- WO-A1-2020/035215

## Beschreibung

Die Erfindung betrifft eine Klebstoffzusammensetzung, ein Verfahren zum dauerhaften Verbinden einer ersten vulkanisierten Kautschukkomponente mit einer zweiten vulkanisierten Kautschukkomponente und einen Verbund umfassend eine erste vulkanisierte Kautschukkomponente und eine zweite vulkanisierte Kautschukkom ponente.

Vulkanisierte Kautschukartikel, wie Fahrzeugreifen, können dauerhaft mit anderen vulkanisierten Kautschukkomponenten verbunden sein. Dies ist beispielsweise bei am Fahrzeugreifen angebrachten gummierten Spikes oder Sensorgehäusen der Fall.

Ferner sind luftlose Reifen mit Speichen bekannt.

Die JP 2021031562 A offenbart eine Klebstoffzusammensetzung auf Urethan-Basis, welche vulkanisierte Kautschuke miteinander verbinden soll.

Die JP 2001288434 A offenbart ein Klebeset, welches geeignet ist, beim Retread von Reifen eingesetzt zu werden. Das Klebeset umfasst zwei getrennte Komponenten.

Der vorliegenden Erfindung liegt die Aufgabe zugrunde, eine Klebstoffzusammensetzung und ein Verfahren zum dauerhaften Verbinden einer ersten vulkanisierten Kautschukkomponente mit einer zweiten vulkanisierten Kautschukkomponente, wodurch ein Verbund gebildet wird, bereitzustellen.

Die Zusammensetzung soll vergleichsweise einfach zusammengesetzt und mit den vulkanisierten Kautschukkomponenten kompatibel sein und eine möglichst einfache Applikation und damit ein möglichst effizientes Verfahren zur Verbindung zweier vulkanisierter Kautschukkomponenten ermöglichen.

Insbesondere soll die Zusammensetzung durch einmaliges Aufbringen applizierbar sein und schnell wirken. Ferner sollen die Handhabung und Lagerung der Zusammensetzung vergleichsweise einfach sein.

Dabei sollen die Zusammensetzung und das Verfahren auch ermöglichen, dass eine dauerhafte Verbindung der Kautschukkomponenten sichergestellt ist, die hohen Anforderungen aufgrund von dynamischen Beanspruchungen bei der Verwendung des Verbundes gerecht wird.

Dabei soll gemäß einer besonderen Aufgabe der Erfindung die Haftung der Kautschukkomponenten aneinander und damit die Haltbarkeit des Verbundes sogar verbessert sein.

Gelöst wird diese Aufgabe durch die Klebstoffzusammensetzung gemäß Anspruch 1.

Ferner wird die Aufgabe durch das Verfahren nach Anspruch 9 und den Verbund nach Anspruch 10 gelöst.

Im Rahmen der vorliegenden Erfindung wird der Einfachheit halber auch der Begriff "Zusammensetzung" für "Klebstoffzusammensetzung" verwendet.

Die erfindungsgemäße Zusammensetzung hat den Vorteil, dass sie vergleichsweise einfach zusammengesetzt ist und aufgrund ihrer Zusammensetzung mit vulkanisierten Kautschukkomponenten, wie Fahrzeugreifen, kompatibel ist.

Ein weiterer Vorteil der erfindungsgemäßen Zusammensetzung in Verbindung mit dem erfindungsgemäßen Verfahren ist insbesondere darin zu sehen, dass das Lösungsmittel verdampft und die resultierende Zusammensetzung der Zusammensetzung einer Kautschukmischung, insbesondere für vulkanisierte Komponenten wie Fahrzeugreifen, sehr ähnlich ist. Hieraus resultieren wiederum ebenfalls eine gute Kompatibilität und Umweltverträglichkeit.

Gleichzeitig ist die erfindungsmäße Zusammensetzung einfach zu handhaben, da insbesondere nicht mehrere Komponenten getrennt voneinander hergestellt, gelagert und appliziert werden müssen. Zudem ist es ausreichend die Zusammensetzung einmal aufzutragen.

Das erfindungsgemäße Verfahren ist vergleichsweise, einfach, schnell und effizient durchzuführen.

Das erfindungsgemäße Verfahren und die Zusammensetzung haben zudem den Vorteil, dass sie eine dauerhafte Verbindung der vulkanisierten Kautschukkomponenten herstellen und gleichzeitig die bereits vulkanisierten Kautschukkomponenten nicht zu großen chemischen und thermischen Beanspruchungen ausgesetzt sind. Hierdurch weisen die Kautschukkomponenten weiterhin die für ihre Verwendung notwendigen physikalischen und chemischen Eigenschaften auf.

Dabei zeigt sich sogar eine Verbesserung der Anhaftung der beiden Kautschukkomponenten aneinander.

Der erfindungsgemäße Verbund zeichnet sich durch eine dauerhafte und sogar verbesserte Haltbarkeit unter hoher dynamischer Beanspruchung aus.

Von der Erfindung sind sämtliche vorteilhafte Ausgestaltungen, die sich unter anderem in den Patentansprüchen widerspiegeln, umfasst. Insbesondere sind von der Erfindung auch Ausgestaltungen umfasst, die sich durch Kombination unterschiedlicher Merkmale, beispielsweise von Bestandteilen der Zusammensetzung unterschiedlicher Abstufungen bei der Bevorzugung dieser Merkmale ergeben, sodass auch eine Kombination eines ersten als "bevorzugt" bezeichneten Merkmals oder im Rahmen einer vorteilhaften oder bevorzugten Ausführungsform beschriebenen Merkmals mit einem weiteren als z. B. "besonders bevorzugt" bezeichneten Merkmal von der Erfindung umfasst ist.

Die erfindungsgemäße Zusammensetzung enthält wenigstens die folgenden Bestandteile:
a) 3 bis 20 Gew.-% wenigstens eines Dienkautschuks; und
b) 70 bis 94 Gew.-% wenigstens eines organischen Lösungsmittels; und
c) 1 bis 7 Gew.-% wenigstens eines Füllstoffs; und
d) 0,1 bis 2 Gew.-% wenigstens eines Kohlenwasserstoffharzes und/oder Polyolefins; und
e) 0,2 bis 1,5 Gew.-% wenigstens eines Aktivators, bevorzugt eine Kombination aus Zinkoxid und wenigstens einer Fettsäure, insbesondere Stearinsäure; und
f) wenigstens ein Schwefel-Vulkanisationssystem.

Die Angaben in Gew.-% beziehen sich auf die Gesamtmenge der Klebstoffzusammensetzung, und zwar insbesondere vor dem Verdampfen oder der Veränderung durch Vulkanisation einzelner Bestandteile.

Dienkautschuke sind dem Fachmann bekannt.

Bevorzugt enthält die erfindungsgemäße Klebstoffzusammensetzung als wenigstens einen Dienkautschuk a) wenigstens einen Dienkautschuk, der ausgewählt ist aus der Gruppe bestehend aus natürlichem Polyisopren (NR; Naturkautschuk), synthetischem Polyisopren (IR), Butadien-Kautschuk (BR) und Styrol-Butadien-Kautschuk (SBR).

Besonders bevorzugt enthält die erfindungsgemäße Klebstoffzusammensetzung als Dienkautschuk a) wenigstens ein natürliches Polyisopren (NR). Hierdurch werden eine besonders gute Haftung und damit Haltbarkeit des Verbundes erzielt. Ferner ist NR besonders kompatibel mit vulkanisierten Kautschukkomponenten, wie Fahrzeugreifen, Spikes, Sensorgehäusen. Zudem werden eine vergleichsweise hohe Langlebigkeit, Scherfestigkeit und eine hohe Tragfähigkeit gegenüber Last sowohl der Zusammensetzung als auch des Verbundes erzielt.

Bei dem natürlichen und/oder synthetischen Polyisopren sämtlicher Ausführungsformen kann es sich sowohl um cis-1,4-Polyisopren als auch um 3,4-Polyisopren handeln. Bevorzugt ist allerdings die Verwendung von cis-1,4-Polyisoprenen mit einem cis-1,4 Anteil > 90 Gew.-%. Zum einen kann solch ein Polyisopren durch stereospezifische Polymerisation in Lösung mit Ziegler-Natta-Katalysatoren oder unter Verwendung von fein verteilten Lithiumalkylen erhalten werden. Zum anderen handelt es sich bei Naturkautschuk (NR) um ein solches cis-1,4 Polyisopren, bei welchem der cis-1,4-Anteil im Naturkautschuk größer 99 Gew.-% ist.

Ferner ist auch ein Gemisch eines oder mehrerer natürlicher Polyisoprene mit einem oder mehreren synthetischen Polyisopren(en) denkbar.

Im Rahmen der vorliegenden Erfindung ist unter dem Begriff "Naturkautschuk" natürlich vorkommender Kautschuk zu verstehen, der von Hevea Gummibäumen und "Nicht-Hevea" Quellen gewonnen werden kann. Nicht-Hevea Quellen sind beispielsweise Guayule Sträucher und Löwenzahn wie beispielsweise TKS (Taraxacum kok-saghyz; Russischer Löwenzahn).

Bevorzugt beträgt die Menge an Dienkautschuken a) 4 bis 16 Gew.-%.

Gemäß einer vorteilhaften Ausführungsform der Erfindung enthält die Zusammensetzung 12 bis 16 Gew.-%, bevorzugt 14 bis 16 Gew.-% Dienkautschuke a), bevorzugt jeweils eines oder mehrere natürliche Polyisoprene.

Gemäß einer weiteren vorteilhaften Ausführungsform der Erfindung enthält die Zusammensetzung 8 bis 12 Gew.-%, bevorzugt 8,5 bis 11 Gew.-% Dienkautschuke a), bevorzugt jeweils eines oder mehrere natürliche Polyisoprene.

Gemäß einer weiteren vorteilhaften Ausführungsform der Erfindung enthält die Zusammensetzung 3 bis 7 Gew.-%, bevorzugt 3,5 bis 6 Gew.-% Dienkautschuke a), bevorzugt jeweils eines oder mehrere natürliche Polyisoprene.

Die erfindungsgemäße Zusammensetzung enthält als Bestandteil b) 70 bis 94 Gew.-% wenigstens eines organischen Lösungsmittels.

Bevorzugt enthält die erfindungsgemäße Klebstoffzusammensetzung als Lösungsmittel b) 70 bis 94 Gew.-% wenigstens eines Lösungsmittels mit einem Siedepunkt von 50 bis 120°C.

Besonders bevorzugt beträgt der Siedepunkt des Lösungsmittels 60 bis 100 °C.

Ein Lösungsmittel mit dem bevorzugten und besonders bevorzugten Siedepunkt weist den Vorteil auf, dass es nicht zu schnell und nicht zu langsam verdampft, sodass die Zusammensetzung einfach handhabbar ist, aber das Lösungsmittel auch nicht zu lange im Verbund verbleibt.

Die Angabe des Siedepunktes im Rahmen der vorliegenden Erfindung bezieht sich auf die Siedetemperatur bei Atmosphärendruck, insbesondere bei 1013 hPa.

Bevorzugt ist das Lösungsmittel b) ausgewählt aus der Gruppe bestehend aus Cyclohexan, Hexan, Toluol, Methylethylketon, Petroleum und Benzin.

Besonders bevorzugt ist das Lösungsmittel b) ausgewählt aus der Gruppe bestehend aus Hexan, Toluol, Methylethylketon und Benzin, wobei das Benzin hierbei bevorzugt einen Siedepunkt von 50 bis 120°C, besonders bevorzugt 90 bis 110 °C, aufweist.

Ganz besonders bevorzugt wird als Lösungsmittel b) Benzin verwendet, welches einen Siedepunkt von 50 bis 120 °C, besonders bevorzugt 90 bis 110 °C, ganz besonders bevorzugt 90 bis 100 °C, aufweist.

Hiermit ist ebenfalls der Vorteil verbunden, dass das Lösungsmittel nicht zu schnell und nicht zu langsam verdampft, sodass die Zusammensetzung einfach handhabbar ist, aber das Lösungsmittel auch nicht zu lange im Verbund verbleibt. Zudem ist Benzin einfach verfügbar und gegenüber anderen Lösungsmitteln, wie Hexan, vergleichsweise weniger schädlich.

Gemäß einer vorteilhaften Ausführungsform der Erfindung enthält die Zusammensetzung 70 bis 80 Gew.-%, bevorzugt 70 bis 75 Gew.-% organische Lösungsmittel b), wobei die oben genannten Bevorzugungen bzgl. der chemischen Natur des Lösungsmittels und des Siedepunktes gelten.

Gemäß einer vorteilhaften Ausführungsform der Erfindung enthält die Zusammensetzung 80 bis 90 Gew.-%, bevorzugt 80 bis 85 Gew.-% organische Lösungsmittel b), wobei die oben genannten Bevorzugungen bzgl. der chemischen Natur des Lösungsmittels und des Siedepunktes gelten.

Gemäß einer vorteilhaften Ausführungsform der Erfindung enthält die Zusammensetzung 90 bis 94 Gew.-% organische Lösungsmittel b), wobei die oben genannten Bevorzugungen bzgl. der chemischen Natur des Lösungsmittels und des Siedepunktes gelten.

Die erfindungsgemäße Klebstoffzusammensetzung enthält als Bestandteil c) 1 bis 7 Gew.-% wenigstens eines Füllstoffs. Hierdurch werden die Festigkeit und insbesondere Reißfestigkeit der Zusammensetzung erhöht und gleichzeitig das Fließverhalten optimiert.

Bevorzugt ist der Füllstoff ausgewählt aus der Gruppe bestehend aus Rußen, Kieselsäuren, Alumosilicaten, Kaolin, Kreide, Stärke, Magnesiumoxid, Titandioxid, Kautschukgelen, Fasern (wie zum Beispiel Aramidfasern, Glasfasern, Carbonfasern, Cellulosefasern), Kohlenstoffnanoröhrchen (carbon nanotubes (CNT) inklusive diskreter CNTs, sogenannte hollow carbon fibers (HCF) und modifizierte CNT enthaltend eine oder mehrere funktionelle Gruppen, wie Hydroxy-, Carboxy und Carbonyl-Gruppen), Graphit, Graphene und sogenannte "carbon-silica dual-phase filler".

Bei der Kieselsäure kann es sich um die dem Fachmann bekannten Kieselsäuretypen, die als Füllstoff für Reifenkautschukmischungen geeignet sind, handeln.

Als Ruße kommen alle dem Fachmann bekannten Rußtypen in Frage.

Bevorzugt enthält die Zusammensetzung als Bestandteil c) wenigstens einen Ruß.

Bevorzugt hat der wenigstens eine Ruß eine Jodzahl, gemäß ASTM D 1510, die auch als Jodadsorptionszahl bezeichnet wird, zwischen 30 und 250 g/kg, bevorzugt 30 bis 180 g/kg, besonders bevorzugt 40 bis 180 g/kg, und eine DBP-Zahl gemäß ASTM D 2414 von 30 bis 200 ml/100 g, bevorzugt 70 bis 200 ml/100g, besonders bevorzugt 90 bis 200 ml/100g.

Die DBP-Zahl gemäß ASTM D 2414 bestimmt das spezifische Absorptionsvolumen eines Rußes oder eines hellen Füllstoffes mittels Dibutylphthalat.

Besonders bevorzugt enthält die Zusammensetzung wenigstens zwei verschiedene Ruße.

Besonders bevorzugt weist ein erster Ruß eine Jodadsorptionszahl von 70 bis 110 g/kg und eine DBP-Zahl von 110 bis 130 ml/100g auf und ein zweiter Ruß eine Jodadsorptionszahl von 30 bis 55 g/kg und eine DBP-Zahl von 110 bis 130 ml/100g auf, wie beispielsweise Ruße des Typs N339 als erster Ruß und N550 als zweiter Ruß.

Gemäß vorteilhafter Ausführungsformen enthält die Zusammensetzung den ersten und den zweiten Ruß in einem Mengenverhältnis von 2,5 bis 3,7 zu 1, bevorzugt 3 bis 3,5 zu 1.

Dabei bezieht sich die Mengenangabe von 1 bis 7 Gew.-% sowie weitere bevorzugte Mengenbereiche, auch im Rahmen von vorteilhaften Ausführungsformen, auf die Gesamtmenge an enthaltenen Rußen als Füllstoffbestandteil c).

Gemäß vorteilhafter Ausführungsformen der Erfindung enthält die Zusammensetzung 6 bis 7 Gew.-% Ruß.

Gemäß weiterer vorteilhafter Ausführungsformen der Erfindung enthält die Zusammensetzung 4 bis 5 Gew.-% Ruß.

Gemäß weiterer vorteilhafter Ausführungsformen der Erfindung enthält die Zusammensetzung 1 bis 2 Gew.-% Ruß.

Die erfindungsgemäße Zusammensetzung enthält als Bestandteil d) 0,1 bis 2 Gew.-% wenigstens eines Kohlenwasserstoffharzes und/oder Polyolefins.

Hierdurch wird eine besonders gute Klebrigkeit der Klebstoffzusammensetzung erzielt.

Als Polyolefin wird bevorzugt wenigstens ein Polybuten eingesetzt. Das Polyolefin, bevorzugt Polybuten, weist bevorzugt ein Zahlenmittel der Molekulargewichtsverteilung Mₙ gemäß GPC von 180 bis 2100 g/mol auf.

Mit einem Polyolefin, bevorzugt Polybuten, wird eine besonders gute Klebrigkeit erzielt, welche durch Wahl des Mₙ weiter optimiert ist.

Gleichzeitig wird eine gute Kompatibilität zu den Kautschukkomponenten des erfindungsgemäßen Verbundes erzielt.

Das Kohlenwasserstoffharz ist insbesondere ein Klebharz und bevorzugt ausgewählt aus der Gruppe bestehend aus aromatischen Harzen, wie insbesondere Phenolharzen, aliphatischen Harzen, wie insbesondere Cs-Harzen. Bevorzugt ist insbesondere die Verwendung eines Formaldehyd-freien Phenolharzes mit einer hohen Klebrigkeit, wie beispielsweise Koresin^{®} der Firma BASF SE.

Bevorzugt wird ein Gemisch von wenigstens zwei verschiedenen Harzen eingesetzt. Auch hier bezieht sich die angegebene Menge von 0,1 bis 2 Gew.-% auf die Gesamtmenge an enthaltenen Harzen.

Die erfindungsgemäße Zusammensetzung enthält als Bestandteil e) 0,2 bis 1,5 Gew.-% wenigstens eines Aktivators, bevorzugt eine Kombination aus Zinkoxid und wenigstens einer Fettsäure, insbesondere Stearinsäure.

Ein derartiges Aktivatorsystem ist dem Fachmann für vulkanisierbare Kautschukmischungen für Fahrzeugreifen bekannt.

Die erfindungsgemäße Zusammensetzung enthält als Bestandteil f) wenigstens ein Schwefel-Vulkanisationssystem.

Der Fachmann versteht unter dem Begriff "Schwefel-Vulkanisationssystem" Feinchemikalien, die eine Schwefel-Vulkanisation ermöglichen.

Bevorzugt enthält die erfindungsgemäße Zusammensetzung daher elementaren Schwefel und/oder wenigstens eine schwefelspendende Substanz und/oder wenigstens einen Beschleuniger.

Als schwefelspendende Substanz können dabei alle dem Fachmann bekannten schwefelspendenden Substanzen verwendet werden. Enthält die Kautschukmischung eine schwefelspendende Substanz, ist diese bevorzugt ausgewählt aus der Gruppe enthaltend z.B. Thiuramdisulfide, wie z.B. Tetrabenzylthiuramdisulfid (TBzTD) und/oder Tetramethylthiuramdisulfid (TMTD) und/oder Tetraethylthiuramdisulfid (TETD), und/oder Thiuramtetrasulfide, wie z.B. Dipentamethylenthiuramtetrasulfid (DPTT), und/oder Dithiophosphate, wie z.B. DipDis (Bis-(Diisopropyl)thiophosphoryldisulfid) und/oder Bis(O,O-2-ethylhexyl-thiophosphoryl)Polysulfid (z. B. Rhenocure SDT 50^{®}, Rheinchemie GmbH) und/oder Zinkdichloryldithiophosphat (z. B. Rhenocure ZDT/S^{®}, Rheinchemie GmbH) und/oder Zinkalkyldithiophosphat, und/oder 1,6-Bis(N,N-dibenzylthiocarbamoyldithio)hexan und/oder Diarylpolysulfide und/oder Dialkylpolysulfide.

Besonders bevorzugt enthält die erfindungsgemäße Zusammensetzung elementaren Schwefel, und zwar bevorzugt in Mengen von 0,15 bis 0,8 Gew.-%.

Besonders bevorzugt enthält die erfindungsgemäße Zusammensetzung wenigstens einen Beschleuniger.

Dabei ist der Beschleuniger bevorzugt ausgewählt aus der Gruppe bestehend aus Thiazolbeschleunigern, Mercaptobeschleunigern, Sulfenamidbeschleunigern, Thiocarbamatbeschleunigern, Thiurambeschleunigern, Thiophosphatbeschleunigern, Thioharnstoffbeschleunigern, Xanthogenat-Beschleunigern und Guanidin-Beschleunigern.

Bevorzugt enthält die erfindungsgemäße Zusammensetzung wenigstens einen Guanidin-Beschleuniger, besonders bevorzugt DPG (Diphenylguanidin).

Bevorzugt enthält die erfindungsgemäße Zusammensetzung wenigstens einen Thiazolbeschleuniger, besonders bevorzugt 2-mercaptobenzothiazol (MBT).

Bevorzugt enthält die erfindungsgemäße Zusammensetzung wenigstens einen Thiocarbamatbeschleunige, besonders bevorzugt Zink-dibenzyl-dithiocarbamat (ZBEC).

Besonders bevorzugt enthält die erfindungsgemäße Zusammensetzung wenigstens zwei Beschleuniger, wie beispielsweise einen Thiazolbeschleuniger, beispielsweise 2-mercaptobenzothiazol (MBT), und einen Thiocarbamatbeschleuniger, wie beispielsweise Zink-dibenzyl-dithiocarbamat (ZBEC).

Besonders bevorzugt enthält die erfindungsgemäße Zusammensetzung drei Beschleuniger, bevorzugt einen Thiazolbeschleuniger, besonders bevorzugt 2-mercaptobenzothiazol (MBT), und einen Thiocarbamatbeschleuniger, bevsonders bevorzugt Zink-dibenzyl-dithiocarbamat (ZBEC) und einen Guanidin-Beschleuniger, besonders bevorzugt DPG (Diphenylguanidin).

Mit den genannten Beschleunigerarten einzeln oder in Kombination miteinander ist es möglich die erfindungsgemäße Zusammensetzung vergleichsweise schnell zu vernetzen und damit ein effizientes erfindungsgemäßes Verfahren bereitzustellen. Gleichzeitig sind die Beschleuniger mit anderen Kautschukmischungen von Fahrzeugreifen kompatibel.

Bevorzugt beträgt die in der erfindungsgemäßen Zusammensetzung enthaltene Menge an Beschleunigern 0,05 bis 0,35 Gew.-%, wobei die oben genannten Bevorzugungen bzgl. der Beschleuniger gelten.

Bevorzugt enthält die erfindungsgemäße Zusammensetzung zusätzlich g) 0,1 bis 1 Gew.-% wenigstens eines Alterungsschutzmittels.

Das wenigstens eine Alterungsschutzmittel g), ist bevorzugt ausgewählt aus der Gruppe bestehend aus Diaminen, wie N-Phenyl-N'-(1,3-dimethylbutyl)-p-phenylendiamin (6PPD), N,N'-Diphenyl-p-phenylendiamin (DPPD), N,N'-Ditolyl-p-phenylendiamin (DTPD), N-(1,4-dimethylpentyl)-N'-phenyl-p-phenylendiamin (7PPD), N-Isopropyl-N'-phenyl-p-phenylendiamin (IPPD),
und Dihydrochinolinen, wie 2,2,4-Trimethyl-1,2-dihydrochinolin (TMQ).

Bevorzugt enthält die erfindungsgemäße Zusammensetzung wenigstens zwei verschiedene Alterungsschutzmittel. Bevorzugt enthält die erfindungsgemäße Zusammensetzung wenigstens 6PPD und TMQ als Alterungsschutzmittel, wobei die angegebenen Mengen jeweils Gesamtmengen an Alterungsschutzmitteln g) darstellen.

Bevorzugt enthält die erfindungsgemäße Zusammensetzung zusätzlich h) 0,5 bis 3,5 Gew.-% wenigstens eines Öls.

Bevorzugt ist das wenigstens eine Öl h) ausgewählt aus Mineralölen und Pflanzenölen.

Bei der Verwendung von Mineralöl ist dieses bevorzugt ausgewählt aus der Gruppe, bestehend aus DAE (Destillated Aromatic Extracts), RAE (Residual Aromatic Extract), TDAE (Treated Destillated Aromatic Extracts), MES (Mild Extracted Solvents) und naphthenischen Ölen.

Bei der Verwendung von Pflanzenöl ist dieses bevorzugt ausgewählt aus der Gruppe bestehend aus Rapsöl und Sonnenblumenöl.

Bevorzugt enthält die erfindungsgemäße Zusammensetzung als Öl h) RAE.

Zur Herstellung der Zusammensetzung werden die genannten Bestandteile mittels des Fachmannes bekannter Vorrichtungen, insbesondere einem Innenmischer, miteinander vermischt.

Ein weiterer Aspekt der vorliegenden Erfindung ist daher ein Verfahren zur Herstellung der erfindungsgemäßen Klebstoffzusammensetzung, welches wenigstens die folgenden Verfahrensschritte umfasst:
A) Bereitstellen einer Kautschukgrundmischung enthaltend wenigstens die folgenden Bestandteile:
   a) 3 bis 20 Gew.-% wenigstens eines Dienkautschuks; und
   c) 1 bis 7 Gew.-% wenigstens eines Füllstoffs; und
   d) 0,1 bis 2 Gew.-% wenigstens eines Kohlenwasserstoffharzes und/oder Polyolefins; und
   e) 0,2 bis 1,5 Gew.-% wenigstens eines Aktivators, bevorzugt eine Kombination aus Zinkoxid und wenigstens einer Fettsäure, insbesondere Stearinsäure; und optional g) 0,1 bis 1 Gew.-% wenigstens eines Alterungsschutzmittels und optional h) 0,5 bis 3,5 Gew.-% wenigstens eines Öls, bevorzugt ausgewählt aus Mineralölen und Pflanzenölen, wobei die genannten Bestandteile in einer Mischvorrichtung zugegeben werden und miteinander vermischt werden;
B) Zugabe von f) wenigstens eines Schwefel-Vulkanisationssystems zu der Kautschukgrundmischung, wobei die Temperatur bevorzugt 110 °C nicht übersteigt, wodurch eine unvulkanisierte Kautschukfertigmischung bereitgestellt wird;
C) Zugabe von b) 70 bis 94 Gew.-% wenigstens eines organischen Lösungsmittels zu der Kautschukfertigmischung, wodurch die erfindungsgemäße Klebstoffzusammensetzung erhalten wird,

wobei sich sämtliche Angaben in Gew.-% auf die
Gesamt-Klebstoffzusammensetzung nach Schritt C) beziehen.

Das erfindungsgemäße Verfahren zum dauerhaften Verbinden einer ersten vulkanisierten Kautschukkomponente mit einer zweiten vulkanisierten Kautschukkomponente, wodurch ein Verbund gebildet wird, ist dadurch gekennzeichnet, dass es wenigstens die folgenden Verfahrensschritte umfasst:
i.) Bereitstellen der ersten vulkanisierten Kautschukkomponente;
ii.) Bereitstellen der zweiten vulkanisierten Kautschukkomponente;
iii.) Bereitstellen der erfindungsgemäßen Klebstoffzusammensetzung, bevorzugt hergestellt durch das Verfahren gemäß der Schritte A) bis C);
iv.) Aufbringen der Klebstoffzusammensetzung aus Schritt iii.) auf wenigstens eine erste Fläche der ersten und/oder zweiten vulkanisierten Kautschukkomponente;
v.) In Kontakt bringen der ersten mit der zweiten Kautschukkomponente, wobei die erste und die zweite Kautschukkomponente zumindest an der ersten mit Klebstoff versehenen Fläche miteinander in Kontakt gebracht werden;
vi.) Aufeinanderpressen von erster und zweiter Kautschukkomponente, wobei hierbei eine Druckübertragung zumindest im Bereich der ersten Klebstofffläche erfolgt;
vii.) optional Verdampfen lassen des Lösungsmittels;
viii.) Einbringen der miteinander in Kontakt gebrachten ersten und zweiten Kautschukkomponente in einen Autoklav, bevorzugt Dampf-Autoklav;
ix.) Heizen in dem Autoklav, bevorzugt bei einer Temperatur von 120 bis 180 °C über eine Zeit von 1 Minute bis 60 Minuten, wodurch ein Verbund gebildet wird.

In Schritt iii.) erfolgt das Bereitstellen der erfindungsgemäßen Klebstoffzusammensetzung. Hierbei sind sämtliche Ausführungen zu der Klebstoffzusammensetzung, auch kurz "Zusammensetzung" genannt, umfasst, die oben und/oder in den weiteren Patentansprüchen aufgeführt sind.

In Schritt iv.) erfolgt das Aufbringen der Klebstoffzusammensetzung aus Schritt iii.) auf wenigstens eine erste Fläche der ersten und/oder zweiten vulkanisierten Kautschukkomponente. Die Erfindung ist somit prinzipiell nicht daran gebunden, auf welche der Komponenten die Zusammensetzung aufgebracht wird und welche der Komponenten als erste und welche als zweite vulkanisierte Kautschukkomponente bezeichnet wird.

Das Aufbringen der Klebstoffzusammensetzung erfolgt mittels geeigneter und dem Fachmann bekannter Vorrichtungen. Dabei kann die Klebstoffzusammensetzung insbesondere aufgesprüht, aufgestrichen oder als Tröpfchen aufgetropft werden. Das Aufbringen erfolgt bevorzugt mittels automatisierter Verfahren.

Die erste vulkanisierte Kautschukkomponente in Schritt i.) ist bevorzugt ein Fahrzeugreifen. Der Fahrzeugreifen ist bevorzugt ein Fahrzeugluftreifen oder ein luftloser Reifen.

Dabei enthält die erste Kautschukkomponente zumindest an der Fläche, über die sie mittels der erfindungsgemäßen Klebstoffzusammensetzung an die zweite Komponente verbunden werden soll, bevorzugt wenigstens einen Dienkautschuk.

Der Dienkautschuk an der Fläche der ersten vulkanisierten Kautschukkomponente ist bevorzugt ausgewählt aus der Gruppe bestehend aus natürlichem Polyisopren (NR), synthetischem Polyisopren (IR), Butadien-Kautschuk (BR), Styrol-Butadien-Kautschuk (SBR), Butyl-Kautschuk und Halobutyl-Kautschuk.

Die Fläche der ersten vulkanisierten Kautschukkomponente ist dabei gemäß bevorzugter Ausführungsformen der Erfindung die Oberfläche eines Laufstreifens, einer Seitenwand, eines Hornprofils, eines sonstigen äußeren Bauteils eines Fahrzeugreifens oder einer Innenschicht eines Fahrzeugluftreifens.

Besonders bevorzugt ist die Fläche die Oberfläche eines Laufstreifens, einer Seitenwand, eines Hornprofils eines Fahrzeugreifens oder einer Innenschicht eines Fahrzeugluftreifens.

Für den Fall, dass die erste vulkanisierte Kautschukkomponente ein Fahrzeugreifen ist und die Fläche die Fläche eines Laufstreifens oder einer Seitenwand ist, ist der Dienkautschuk bevorzugt ausgewählt aus der Gruppe bestehend aus natürlichem Polyisopren (NR), synthetischem Polyisopren (IR), Butadien-Kautschuk (BR), Styrol-Butadien-Kautschuk (SBR).

Gemäß bevorzugter Ausführungsformen der Erfindung ist die erste Fläche der ersten vulkanisierten Kautschukkomponente der Boden einer Öffnung zur Aufnahme eines Spikes im Laufstreifen eines vulkanisierten Fahrzeugreifens und damit der Boden eines Spikeloches.

Für den Fall, dass die erste vulkanisierte Kautschukkomponente ein Fahrzeugreifen ist und die Fläche die Fläche einer luftdicht ausgeführten Innenschicht ist, ist der Dienkautschuk bevorzugt ausgewählt aus der Gruppe bestehend aus Butyl-Kautschuk und Halobutyl-Kautschuk, wobei zudem optional natürliches Polyisopren (NR), und/oder synthetisches Polyisopren (IR) in der ersten vulkanisierten Kautschukkomponente enthalten sein kann.

Die Fläche der ersten vulkanisierten Kautschukkomponente ist gemäß weiterer bevorzugter Ausführungsformen eine Fläche eines luftlosen Reifens.

Luftlose Reifen können zum einen Vollgummireifen sein, welche für die Anwendung als Industrie- oder Baustellenreifen bekannt sind.

Ferner sind unter dem Begriff "luftlose Reifen" aber auch Reifen zu verstehen, die dem Fachmann als "airless spokes tires" und damit "luftlose Speichenreifen" bekannt sind. Derartige Reifen sind beispielsweise in der EP 1894748 A1 bzw. US 2008053586 A1 und der EP 3 086 948 B1 offenbart.

Die zweite vulkanisierte Kautschukkomponente in Schritt ii.) ist bevorzugt ein vulkanisierter Kautschukbestandteil eines Spikes oder einer Sensorbefestigung oder einer Speiche.

Dabei enthält die zweite Kautschukkomponente zumindest an der Fläche, über die sie mittels der erfindungsgemäßen Klebstoffzusammensetzung an die erste Komponente verbunden werden soll, bevorzugt wenigstens einen Dienkautschuk.

Der Dienkautschuk an der Fläche der zweiten vulkanisierten Kautschukkomponente ist bevorzugt ausgewählt aus der Gruppe bestehend aus natürlichem Polyisopren (NR), synthetischem Polyisopren (IR), Butadien-Kautschuk (BR), Styrol-Butadien-Kautschuk (SBR), Butyl-Kautschuk und Halobutyl-Kautschuk.

Bei den Spikes kann es sich sowohl um Vollgummi-Spikes als auch Spikes aus Metall aufweisend wenigstens einen gummierten Bereich handeln.

Unter "Vollgummi-Spikes" werden Spikes verstanden, deren Körper aus wenigstens einer Kautschukmischung aufgebaut ist.

Unter "Spikes aus Metall aufweisend wenigstens einen gummierten Bereich" werden Spikes verstanden, deren Körper aus einem Metall aufgebaut ist und die aber an wenigstens einer Oberfläche einen gummierten Bereich und damit eine gummierte Fläche aufweisen, über die die Spikes haftend an den Fahrzeugreifen angebracht werden.

Die Spikes weisen somit im Rahmen der vorliegenden Erfindung wenigstens einen vulkanisierten Kautschukbestandteil auf, über den erfindungsgemäß mittels der erfindungsgemäßen Klebstoffzusammensetzung die dauerhafte Anbindung an eine weitere vulkanisierte Kautschukkomponente, wie insbesondere einen Fahrzeugreifen, ermöglicht wird.

Unter "Sensorbefestigungen" werden Elemente zur Befestigung verstanden, die wenigstens einen Sensor dauerhaft aufnehmen können und somit eine den Sensor schonende Verbindung zwischen Sensor und einem weiteren Artikel, wie einem Fahrzeugreifen, ermöglichen.

Die Sensorbefestigung weist somit im Rahmen der vorliegenden Erfindung wenigstens einen vulkanisierten Kautschukbestandteil auf, über den erfindungsgemäß mittels der erfindungsgemäßen Klebstoffzusammensetzung die dauerhafte Anbindung an eine weitere vulkanisierte Kautschukkomponente, wie insbesondere einen Fahrzeugreifen, ermöglicht wird.

Bevorzugt ist die Sensorbefestigung ein vulkanisierter Kautschukcontainer, der wenigstens einen Sensor aufnehmen kann.

Im Fall von "airless spokes tires" ist insbesondere die erste vulkanisierte Kautschukkomponente ein Ring und die zweite vulkanisierte Kautschukkomponente eine Speiche.

In Schritt v.) erfolgt das in Kontakt bringen der ersten mit der zweiten Kautschukkomponente, wobei die erste und die zweite Kautschukkomponente zumindest an der ersten mit Klebstoff versehenen Fläche miteinander in Kontakt gebracht werden.

In Schritt vi.) erfolgt das Aufeinanderpressen von erster und zweiter Kautschukkomponente, wobei hierbei eine Druckübertragung zumindest im Bereich der ersten Klebstofffläche erfolgt.

In Schritt vii.) erfolgt optional das Verdampfen lassen des Lösungsmittels. Dies erfolgt insbesondere durch Zeitablauf und wird insbesondere dann durchgeführt, wenn das Lösungsmittel nicht bereits instantan beim oder kurz nach dem Aufbringen, also bei den Schritten iv.) bis vi.), verdampft ist.

In Schritt viii.) erfolgt das Einbringen der miteinander in Kontakt gebrachten ersten und zweiten Kautschukkomponente in einen Autoklav, bevorzugt Dampf-Autoklav. Dampf-Autoklave sind dem Fachmann bekannt.

In Schritt ix.) erfolgt das Heizen in dem Autoklav, bevorzugt bei einer Temperatur von 120 bis 180 °C über eine Zeit von eine Minute bis 60 Minuten, wodurch ein Verbund gebildet wird.

Durch das Heizen wird die Klebstoffzusammensetzung an die beiden vulkanisierten Kautschukzusammensetzungen anvulkanisiert. Hierdurch entsteht ebenfalls eine vulkanisierte Verbindung zwischen der ersten und der zweiten Kautschukkomponente.

Der Fachmann erkennt, wie er Temperatur und Zeit aufeinander abstimmen kann, um ein optimales Ausheizen der Klebstoffzusammensetzung zu erzielen.

Je niedriger die Temperatur gewählt wird, desto länger wird der Fachmann die Heizdauer wählen.

Insbesondere und bevorzugt erfolgt das Heizen in Schritt ix.) bei einer Temperatur von 160 bis 180 °C, besonders bevorzugt 170 °C, für eine Minute bis 3 Minuten, besonders bevorzugt eine Minute.

Derartige Bedingungen sind insbesondere durch die kurze Dauer besonders schonend für die bereits vulkanisierten - erste und zweite - Kautschukkomponenten. Derartige Bedingungen sind besonders für den Fall geeignet, dass die erste vulkanisierte Kautschukkomponente ein Fahrzeugreifen und die zweite vulkanisierte Kautschukkomponente ein vulkanisierter Kautschukbestandteil eines Spikes oder einer Sensorbefestigung ist.

In dem erfindungsgemäßen Verfahren ist es somit gemäß bevorzugter Ausführungsformen vorgesehen, dass die erste vulkanisierte Kautschukkomponente ein Fahrzeugreifen und die zweite vulkanisierte Kautschukkomponente ein vulkanisierter Kautschukbestandteil eines Spikes oder einer Sensorbefestigung ist

Ein weiterer Gegenstand der vorliegenden Erfindung ist ein Verbund umfassend eine erste vulkanisierte Kautschukkomponente und eine zweite vulkanisierte Kautschukkomponente, der dadurch gekennzeichnet ist, dass er nach dem erfindungsgemäßen Verfahren wie vorstehend beschrieben hergestellt ist.

Es gelten sämtliche obige Ausführungen, insbesondere hinsichtlich der ersten und der zweiten Kautschukkomponente.

Gemäß bevorzugter Ausführungsformen der Erfindung ist die erste vulkanisierte Kautschukkomponente des Verbundes ein Fahrzeugreifen, insbesondere ein Fahrzeugluftreifen oder ein luftloser Reifen.

Gemäß bevorzugter Ausführungsformen der Erfindung ist die zweite vulkanisierte Kautschukkomponente ein vulkanisierter Kautschukbestandteil eines Spikes oder einer Sensorbefestigung oder einer Speiche.

Gemäß besonders vorteilhafter Ausführungsformen der Erfindung ist die erste vulkanisierte Kautschukkomponente ein Fahrzeugreifen und die zweite vulkanisierte Kautschukkomponente ein vulkanisierter Kautschukbestandteil eines Spikes oder einer Sensorbefestigung.

Gemäß einer besonders vorteilhaften Ausführungsform der Erfindung ist die erste vulkanisierte Kautschukkomponente ein Fahrzeugreifen und die zweite vulkanisierte Kautschukkomponente ein vulkanisierter Kautschukbestandteil eines Spikes.

Gemäß einer besonders vorteilhaften Ausführungsform der Erfindung ist die erste vulkanisierte Kautschukkomponente ein Fahrzeugreifen und die zweite vulkanisierte Kautschukkomponente ein vulkanisierter Kautschukbestandteil einer Sensorbefestigung.

Bevorzugt ist die Sensorbefestigung sämtlicher Ausführungsformen ein vulkanisierter Kautschukcontainer, der wenigstens einen Sensor aufnehmen kann.

Die Erfindung soll nun anhand von Ausführungsbeispielen näher erläutert werden. In Tabelle 1 sind drei mögliche erfindungsgemäße Klebstoffzusammensetzungen aufgeführt, welche mit E1 bis E3 gekennzeichnet sind. Die Zahlenangaben stellen Gew.-% bezogen auf die Gesamtmenge an jeweiliger Zusammensetzung dar. Die Zusammensetzungen wurden jeweils mit dem oben beschriebenen Verfahren gemäß der Schritte A) bis C) hergestellt, bei dem zunächst A) eine Kautschukgrundmischung bereitgestellt wurde, die alle Substanzen außer Benzin und die Vulkanisationschemikalien enthielt. Im Anschluss wurden B) bei verringerter Temperatur, maximal 110 °C, die Vulkanisationschemikalien, nämlich Schwefel und die genannten Beschleuniger, zugegeben, wodurch eine Kautschukfertigmischung erzeugt wurde. Anschließend wurde C) jeweils Benzin als Lösungsmittel zugegeben. Die Bestandteile wurden miteinander vermischt.

### Verwendete Substanzen

1) Harze: Aliphatisches Cs-Harz und Phenolharz (Koresin^{®}, Fa. BASF)
2) Alterungsschutzmittel: 6PPD und TMQ
3) Beschleuniger: MBT, ZBEC und DPG
4) Benzin: Siedepunkt 90 bis 100 °C

**Tabelle 1**

| **Bestandteil** | **E1** | **E2** | **E3** |
|---|---|---|---|
| NR | 15,2 | 9,7 | 4,3 |
| Ruß N339 | 5,0 | 3,1 | 1,4 |
| Ruß N550 | 1,5 | 1,0 | 0,4 |
| RAE | 3, | 2,0 | 0,9 |
| Harze ¹⁾ | 0,8 | 0,5 | 0,2 |
| Alterungsschutzmittel ²⁾ | 0,5 | 0,3 | 0,2 |
| Zinkoxid | 0,8 | 0,5 | 0,2 |
| Stearinsäure | 0,2 | 0,2 | 0,1 |
| Beschleuniger ³⁾ | 0,3 | 0,2 | 0,1 |
| Schwefel | 0,7 | 0,5 | 0,2 |
| Benzin ⁴⁾ | 72 | 82 | 92 |

Mit den erfindungsgemäßen Zusammensetzungen E2 und E3 wurden Versuche durchgeführt, wobei das erfindungsgemäße Verfahren durchgeführt wurde:
Gemäß Schritt i.) wurden als erste vulkanisierte Kautschukkomponenten vulkanisierte Fahrzeugluftreifen bereitgestellt. Die Fahrzeugluftreifen wiesen jeweils 195 Öffnungen zur Aufnahme von Spikes auf (Spikelöcher).
Gemäß Schritt ii.) wurden als zweite vulkanisierte Kautschukkomponente Vollgummi-Spikes bereitgestellt.
Gemäß Schritt iii.) wurden die erfindungsgemäßen Zusammensetzungen E2 und E3 wie oben beschrieben bereitgestellt.
Die Zusammensetzungen E2 und E3 wurden gemäß Schritt iv.) jeweils in 195 vorbereitete Spikelöcher jeweils eines vulkanisierten Fahrzeugluftreifens gemäß Schritt i.) gegeben, wobei die Zusammensetzungen insbesondere auf den jeweiligen Boden des Spikeloches als erster Fläche der vulkanisierten Kautschukkomponente in Form gegeben wurden. Die Zusammensetzungen E2 und E3 wurden dabei jeweils in unterschiedliche Reifen gegeben, sodass jedem Reifen eine Klebstoffzusammensetzung zuzuordnen war. Die Zusammensetzungen wurden als Tropfen appliziert.

Im Anschluss wurden jeweils gemäß Schritt v.) die Spikes mittels bekannter Vorrichtungen, insbesondere einer Spike-Pistole, in die Öffnungen eingebracht. Gemäß Schritt vi.) wurden die Spikes angedrückt, wodurch jeweils wenigstens auf die Böden der Spikelöcher eine gezielte Druckübertragung erfolgte. Gleichzeitig entstand aber auch entlang der Spikekörper ein von allen Seiten wirkender Druck, da die Spikeöffnungen vergleichsweise eng ausgelegt waren. Hierbei wurde jeweils die Klebstoffzusammensetzung auch entlang des Spikekörpers vom Boden weg nach oben bzw. außen gedrückt.

Während der Schritte iv.) und vi.) ist ferner das Lösungsmittel Benzin verdampft. Daher wurde der Reifen gemäß Schritt viii.) direkt in einen Dampf-Autoklav eingebracht und gemäß Schritt ix.) für eine Minute bei einer Temperatur von 170 °C geheizt. Hierdurch wurden erfindungsgemäße Verbunde E2' und E3' auf besonders schonende und effiziente Weise hergestellt.

Das beschriebene beispielhafte Verfahren ist statt mit den beispielhaften Zusammensetzungen E2 und E3 auch mit anderen erfindungsgemäßen Zusammensetzungen durchführbar, inklusive sämtlicher Abstufungen der Bevorzugung der einzelnen Merkmale der Zusammensetzung.

Die erfindungsgemäßen Verbunde E2' und E3' wurden auf ihre Güte der Anhaftung der Spikes an/in den Reifen getestet, wobei die durchschnittliche Auszugskraft ermittelt wurde (Gerät Zwick/Roell, Vorkraft 5 N, Geschwindigkeit bis Prüfende 120 mm/min).

Als Referenz diente ein Vergleichsverbund V1' aus Reifen und Spikes, der anstelle einer erfindungsgemäßen Zusammensetzung ein im Handel erhältliches Klebemittel (Chemosil^{®} 6025, Fa. LORD Corporation) aufwies. Das im Handel erhältliche Klebemittel wurde wie oben für E2 und E3 beschrieben analog der Schritte i.) bis ix.) appliziert.

Die Ergebnisse sind in Tabelle 2 zusammengefasst:

**Tabelle 2**

| | V1' | E2' | E3' |
|---|---|---|---|
| Auszugskraft [N] | 600 | 850 | 675 |

Wie an Tabelle 2 erkennbar, werden mit erfindungsgemäßen Klebstoffzusammensetzungen sogar bessere Haftungen der Spikes an/in den Reifen erzielt, was an den größeren benötigten Auszugskräften für E2' und E3' erkennbar ist.

Somit sind mit der vorliegenden Erfindung Klebstoffzusammensetzungen bereitgestellt, die einfach zusammengesetzt, kompatibel mit vulkanisierten Kautschukkomponenten, wie Fahrzeugreifen und Spikes, und einfach handhabbar sind und zudem eine bessere Anhaftung und damit einen haltbareren Verbund zweier vulkanisierter Kautschukkomponenten ermöglichen. Das zugehörige erfindungsgemäße Verfahren ist vergleichsweise schnell und einfach durchführbar, wobei insbesondere gleichzeitig durch die kurze Heizzeit in Schritt ix.) die bereits vulkanisierten Komponenten geschont werden. Der erfindungsgemäß hergestellte Verbund zeichnet sich durch eine verbesserte Haltbarkeit aus, insbesondere gegenüber hohen Anforderungen aufgrund dynamischer Beanspruchung.

## Patentansprüche

1. Klebstoffzusammensetzung enthaltend wenigstens die folgenden Bestandteile:
a) 3 bis 20 Gew.-% wenigstens eines Dienkautschuks; und
b) 70 bis 94 Gew.-% wenigstens eines organischen Lösungsmittels; und
c) 1 bis 7 Gew.-% wenigstens eines Füllstoffs; und
d) 0,1 bis 2 Gew.-% wenigstens eines Kohlenwasserstoffharzes und/oder Polyolefins; und
e) 0,2 bis 1,5 Gew.-% wenigstens eines Aktivators, bevorzugt eine Kombination aus Zinkoxid und wenigstens einer Fettsäure, insbesondere Stearinsäure; und
f) wenigstens ein Schwefel-Vulkanisationssystem.

2. Zusammensetzung nach Anspruch 1, **dadurch gekennzeichnet, dass** sie zusätzlich g) 0,1 bis 1 Gew.-% wenigstens eines Alterungsschutzmittels enthält.

3. Zusammensetzung nach Anspruch 1 oder 2, **dadurch gekennzeichnet, dass** sie zusätzlich h) 0,5 bis 3,5 Gew.-% wenigstens eines Öls, bevorzugt ausgewählt aus Mineralölen und Pflanzenölen, enthält.

4. Zusammensetzung nach einem der vorherigen Ansprüche, **dadurch gekennzeichnet, dass** sie als Lösungsmittel b) 70 bis 94 Gew.-% wenigstens eines Lösungsmittels mit einem Siedepunkt von 50 bis 120 °C enthält.

5. Zusammensetzung nach Anspruch 1, **dadurch gekennzeichnet, dass** das Lösungsmittel b) ausgewählt ist aus der Gruppe bestehend aus Hexan, Toluol, Methylethylketon, Petroleum und Benzin.

6. Zusammensetzung nach einem der vorherigen Ansprüche, **dadurch gekennzeichnet, dass** sie als Lösungsmittel b) 70 bis 94 Gew.-% Benzin enthält, wobei das Benzin bevorzugt einen Siedepunkt von 50 bis 120 °C, besonders bevorzugt 90 bis 110 °C, aufweist.

7. Zusammensetzung nach einem der vorherigen Ansprüche, **dadurch gekennzeichnet, dass** sie als wenigstens einen Dienkautschuk a) wenigstens einen Dienkautschuk enthält, der ausgewählt ist aus der Gruppe bestehend aus natürlichem Polyisopren (NR), synthetischem Polyisopren (IR), Butadien-Kautschuk (BR) und Styrol-Butadien-Kautschuk (SBR).

8. Zusammensetzung nach Anspruch 7, **dadurch gekennzeichnet, dass** sie als Dienkautschuk a) natürliches Polyisopren enthält.

9. Verfahren zum dauerhaften Verbinden einer ersten vulkanisierten Kautschukkomponente mit einer zweiten vulkanisierten Kautschukkomponente, wodurch ein Verbund gebildet wird, **dadurch gekennzeichnet, dass** es wenigstens die folgenden Verfahrensschritte umfasst:
i.) Bereitstellen der ersten vulkanisierten Kautschukkomponente;
ii.) Bereitstellen der zweiten vulkanisierten Kautschukkomponente;
iii.) Bereitstellen der Klebstoffzusammensetzung nach einem der Ansprüche 1 bis 8;
iv.) Aufbringen der Klebstoffzusammensetzung aus Schritt iii.) auf wenigstens eine erste Fläche der ersten und/oder zweiten vulkanisierten Kautschukkomponente;
v.) In Kontakt bringen der ersten mit der zweiten Kautschukkomponente, wobei die erste und die zweite Kautschukkomponente zumindest an der ersten mit Klebstoff versehenen Fläche miteinander in Kontakt gebracht werden;
vi.) Aufeinanderpressen von erster und zweiter Kautschukkomponente, wobei hierbei eine Druckübertragung zumindest im Bereich der ersten Klebstofffläche erfolgt;
vii.) optional Verdampfen lassen des Lösungsmittels;
viii.) Einbringen der miteinander in Kontakt gebrachten ersten und zweiten Kautschukkomponente in einen Autoklav, bevorzugt Dampf-Autoklav;
ix.) Heizen in dem Autoklav, bevorzugt bei einer Temperatur von 120 bis 180 °C über eine Zeit von 1 Minute bis 60 Minuten, wodurch ein Verbund gebildet wird.

10. Verbund umfassend eine erste vulkanisierte Kautschukkomponente und eine zweite vulkanisierte Kautschukkomponente, **dadurch gekennzeichnet, dass** er nach dem Verfahren gemäß Anspruch 9 hergestellt ist.

11. Verbund nach Anspruch 10, **dadurch gekennzeichnet, dass** die erste vulkanisierte Kautschukkomponente ein Fahrzeugreifen, insbesondere ein Fahrzeugluftreifen oder ein luftloser Reifen, ist.

12. Verbund nach einem der Ansprüche 10 oder 11, **dadurch gekennzeichnet, dass** die zweite vulkanisierte Kautschukkomponente ein vulkanisierter Kautschukbestandteil eines Spikes oder einer Sensorbefestigung oder einer Speiche ist.

## Claims

1. Adhesive composition containing at least the following constituents:
a) 3% to 20% by weight of at least one diene rubber; and
b) 70% to 94% by weight of at least one organic solvent; and
c) 1% to 7% by weight of at least one filler; and
d) 0.1% to 2% by weight of at least one hydrocarbon resin and/or polyolefin; and
e) 0.2% to 1.5% by weight of at least one activator, preferably a combination of zinc oxide and at least one fatty acid, in particular stearic acid; and
f) at least one sulfur vulcanization system.

2. Composition according to Claim 1, **characterized in that** it additionally contains g) 0.1% to 1% by weight of at least one aging stabilizer.

3. Composition according to Claim 1 or 2, **characterized in that** it additionally contains h) 0.5% to 3.5% by weight of at least one oil, preferably selected from mineral oils and plant oils.

4. Composition according to any of the preceding claims, **characterized in that** it contains as solvent b) 70% to 94% by weight of at least one solvent having a boiling point of 50°C to 120°C.

5. Composition according to Claim 1, **characterized in that** the solvent b) is selected from the group consisting of hexane, toluene, methyl ethyl ketone, petroleum and benzine.

6. Composition according to any of the preceding claims, **characterized in that** it contains as solvent b) 70% to 94% by weight of benzine, wherein the benzine preferably has a boiling point of 50°C to 120°C, particularly preferably 90°C to 110°C.

7. Composition according to any of the preceding claims, **characterized in that** it contains as at least one diene rubber a) at least one diene rubber selected from the group consisting of natural polyisoprene (NR), synthetic polyisoprene (IR), butadiene rubber (BR) and styrene-butadiene rubber (SBR).

8. Composition according to Claim 7, **characterized in that** it contains natural polyisoprene as diene rubber a).

9. Process for permanent bonding of a first vulcanized rubber component with a second vulcanized rubber component to form a composite, **characterized in that** it comprises at least the following process steps:
i.) providing the first vulcanized rubber component;
ii.) providing the second vulcanized rubber component;
iii.) providing the adhesive composition according to any of Claims 1 to 8;
iv.) applying the adhesive composition from step iii.) to at least a first surface of the first and/or second vulcanized rubber components;
v.) contacting the first rubber component with the second rubber component, wherein the first and the second rubber component are contacted with one another at least at the first surface provided with adhesive;
vi.) pressing together the first and second rubber component, thus effecting a pressure transmission at least in the region of the first adhesive area;
vii.) optionally evaporating the solvent;
viii.) introducing the first and second rubber component contacted with one another into an autoclave, preferably steam autoclave;
ix.) heating in the autoclave, preferably at a temperature of 120°C to 180°C over a time of 1 minute to 60 minutes, thus forming a composite.

10. Composite comprising a first vulcanized rubber component and a second vulcanized rubber component, **characterized in that** it has been produced by the process according to Claim 9.

11. Composite according to Claim 10, **characterized in that** the first vulcanized rubber component is a vehicle tire, in particular a pneumatic vehicle tire or an airless tire.

12. Composition according to either of Claims 10 or 11, **characterized in that** the second vulcanized rubber component is a vulcanized rubber constituent of a spike or a sensor mounting or a spoke.

## Revendications

1. Composition adhésive contenant au moins les constituants suivants :
a) 3 à 20% en poids d'au moins un caoutchouc diénique ; et
b) 70 à 94% en poids d'au moins un solvant organique ; et
c) 1 à 7% en poids d'au moins une charge ; et
d) 0,1 à 2% en poids d'au moins une résine hydrocarbonée et/ou polyoléfine ; et
e) 0,2 à 1,5% en poids d'au moins un activateur, de préférence une combinaison d'oxyde de zinc et d'au moins un acide gras, en particulier l'acide stéarique ; et
f) au moins un système de vulcanisation soufré.

2. Composition selon la revendication 1, **caractérisée en ce qu'**elle contient en plus g) 0,1 à 1% en poids d'au moins un agent de protection contre le vieillissement.

3. Composition selon la revendication 1 ou 2, **caractérisée en ce qu'**elle contient en plus h) 0,5 à 3,5% en poids d'au moins une huile, de préférence choisie parmi les huiles minérales et les huiles végétales.

4. Composition selon l'une des revendications précédentes, **caractérisée en ce qu'**elle contient comme solvant b) 70 à 94% en poids d'au moins un solvant présentant un point d'ébullition de 50 à 120°C.

5. Composition selon la revendication 1, **caractérisée en ce que** le solvant b) est choisi dans le groupe constitué par l'hexane, le toluène, la méthyléthylcétone, le pétrole et l'essence.

6. Composition selon l'une des revendications précédentes, **caractérisée en ce qu'**elle contient comme solvant b) 70 à 94% en poids d'essence, l'essence présentant de préférence un point d'ébullition de 50 à 120°C, de manière particulièrement préférée de 90 à 110°C.

7. Composition selon l'une des revendications précédentes, **caractérisée en ce qu'**elle contient, en tant qu'au moins un caoutchouc diénique a), au moins un caoutchouc diénique qui est choisi dans le groupe constitué par le polyisoprène naturel (NR), le polyisoprène synthétique (IR), le caoutchouc de butadiène (BR) et le caoutchouc de styrène-butadiène (SBR).

8. Composition selon la revendication 7, **caractérisée en ce qu'**elle contient, en tant que caoutchouc diénique, du polyisoprène naturel.

9. Procédé pour le collage durable d'un premier composant de caoutchouc vulcanisé et d'un deuxième composant de caoutchouc vulcanisé, suite à quoi un composite est formé, **caractérisé en ce qu'**il comprend au moins les étapes de procédé suivantes :
i.) mise à disposition du premier composant de caoutchouc vulcanisé ;
ii.) mise à disposition du deuxième composant de caoutchouc vulcanisé ;
iii.) mise à disposition de la composition adhésive selon l'une des revendications 1 à 8,
iv.) application de la composition adhésive de l'étape iii.) sur au moins une première surface du premier et/ou du deuxième composant de caoutchouc vulcanisé ;
v.) mise en contact du premier et du deuxième composant de caoutchouc, le premier et le deuxième composant de caoutchouc étant mis en contact l'un avec l'autre au moins au niveau de la première surface pourvue d'adhésif ;
vi.) pressage du premier et du deuxième composant de caoutchouc l'un sur l'autre, un transfert par pression s'effectuant au moins dans la zone de la première surface adhésive ;
vii.) éventuellement évaporation du solvant ;
viii.) introduction du premier et du deuxième composant de caoutchouc mis en contact l'un avec l'autre dans un autoclave, de préférence un autoclave à vapeur ;
ix.) chauffage dans l'autoclave, de préférence à une température de 120 à 180°C sur une durée de 1 minute à 60 minutes, suite à quoi un composite se forme.

10. Composite comprenant un premier composant de caoutchouc vulcanisé et un deuxième composant de caoutchouc vulcanisé, **caractérisé en ce qu'**il a été préparé selon le procédé selon la revendication 9.

11. Composite selon la revendication 10, **caractérisé en ce que** le premier composant de caoutchouc vulcanisé est un pneu de véhicule, en particulier un pneu de véhicule à air ou un pneu sans air.

12. Composite selon la revendication 10 ou 11, **caractérisé en ce que** le deuxième composant de caoutchouc vulcanisé est un élément en caoutchouc vulcanisé d'un crampon ou d'une fixation de capteur ou d'un rayon.
